# EUROPEAN PATENT APPLICATION

(11) **EP 4 446 379 A1**
(43) Date of publication of application: **16.10.2024**
(21) Application number: 22904256.9
(22) Date of filing: 07.12.2022
(51) Int. Cl.: C08L 15/00, B60C 1/00, B60C 11/00, C08C 19/25, C08K 3/36, C08K 5/5419, C08K 5/548, C08L 9/06, C08L 57/00, C08L 91/00, C08L 101/00

(54) **RUBBER COMPOSITION FOR TIRES**

(30) Priority: 08.12.2021 JP 2021199170; 14.10.2022 JP 2022165395
(71) Applicant: The Yokohama Rubber Co., Ltd., Hiratsuka-shi, Kanagawa 254-8601 (JP)
(72) Inventor: SAWA, Hideaki, Hiratsuka-shi, Kanagawa 254-8601 (JP); SUGIMOTO, Hiroki, Hiratsuka-shi, Kanagawa 254-8601 (JP); HIGUCHI, Ryota, Hiratsuka-shi, Kanagawa 254-8601 (JP)
(74) Representative: Grünecker Patent- und Rechtsanwälte PartG mbB
(86) International application number: PCT/JP2022/045074
(87) International publication number: WO 2023/106328

(57) **Abstract**

Provided is a rubber composition for tires providing wet performance and wear resistance in a compatible manner. A rubber composition for tires is characterized by containing 30 parts by mass or more of silica blended in 100 parts by mass of a diene rubber containing from 30 to 90 mass% of a modified styrene-butadiene rubber having an alkoxysilyl group. When measured by gel permeation chromatography, the modified styrene-butadiene rubber has a molecular weight distribution curve of a unimodal shape and the molecular weight distribution (PDI) of less than 1.7. A glass transition temperature of the rubber composition for tires is higher than -50°C.

## Description

### Technical Field

The present invention relates to a rubber composition for tires providing wet performance and wear resistance in a compatible manner.

### Background Art

Summer tires are required to have good wear resistance as well as excellent wet performance. Furthermore, high-performance tires for motor sports are also required to have high wet performance in unique conditions such as where dusts and greasy dirt are floating on a road surface at the beginning of rainfall, or where an oily film originated from an exhaust gas or machine oil of automobiles floats on a road surface when water amount decreases. A large amount of silica may be blended in a rubber composition for tires to enhance wet performance; however, this may reduce processability due to increased viscosity of the rubber composition or may reduce dispersibility of silica, and thus an expected wet performance may not be achieved.

Patent Document 1 thus describes a rubber composition for tires containing a unique modified styrene-butadiene rubber and silica. However, when a large amount of silica is blended in a modified styrene-butadiene rubber, rubber hardness becomes higher, and road noise such as acceleration pass-by noise tends to increase. To improve wet performance without worsening road noise, for example, raising the glass transition temperature of a rubber composition poses the issue of deteriorating wear resistance. Thus, a rubber composition for tires providing wet performance and wear resistance in a well-balanced, compatible manner has not yet been developed.

### Citation List

### Patent Literature

Patent Document 1: JP 2009-161778 A

### Summary of Invention

### Technical Problem

An object of the present invention is to provide a rubber composition for tires providing wet performance and wear resistance in a compatible manner.

### Solution to Problem

The rubber composition for tires according to an embodiment of the present invention to achieve the object described above is characterized by containing 30 parts by mass or more of silica blended in 100 parts by mass of a diene rubber, the diene rubber containing from 30 to 90 mass% of a modified styrene-butadiene rubber containing an alkoxysilyl group, the modified styrene-butadiene rubber having, when measured by gel permeation chromatography, a molecular weight distribution curve of a unimodal shape and a molecular weight distribution (PDI) of less than 1.7, and a glass transition temperature of the rubber composition for tires being higher than -50°C.

### Advantageous Effects of Invention

According to the rubber composition for tires of an embodiment of the present invention, because the present rubber composition includes a diene rubber and silica, the diene rubber containing a modified styrene-butadiene rubber having an alkoxysilyl group, the modified styrene-butadiene rubber having a unimodal molecular weight distribution curve and the molecular weight distribution (PDI) of less than 1.7 as measured by gel permeation chromatography, and because the glass transition temperature is higher than - 50°C, wet performance and wear resistance can be achieved in a compatible manner at a higher level.

The rubber composition for tires of an embodiment of the present invention can be suitably used for summer tires. For this rubber composition for tires, from 30 to 180 parts by mass of silica is preferably blended in the diene rubber. Furthermore, the rubber hardness at 20°C is preferably 55 or higher. Furthermore, from 0.1 to 20 parts by mass of alkyltriethoxysilane containing an alkyl group having from 7 to 20 carbons is blended with respect to the silica content.

The rubber composition for tires preferably contains from 2 to 20 mass% of a silane coupling agent with respect to the silica content, and the silane coupling agent is preferably represented by Average Compositional Formula (1) or General Formula (2).

(A)ₐ(B)_{b}(C)_{c}(D)_{d}(R1)ₑSiO_{(4-2a-b-c-d-e)/2} (1)

In Formula (1), A represents a divalent organic group containing a sulfide group, B represents a monovalent hydrocarbon group having from 5 to 10 carbons, C represents a hydrolyzable group, D represents an organic group containing a mercapto group, R1 represents a monovalent hydrocarbon group having from 1 to 4 carbons, and a to e satisfy the relationships: 0 ≤ a < 1, 0 < b < 1, 0 < c < 3, 0 < d < 1, 0 ≤ e < 2, and 0 < 2a + b + c + d + e < 4.

(CₚH₂ₚ₊₁)ₜ(CₚH₂ₚ₊₁O)₃₋ₜ-Si-C_{q}H_{2q}-S-C(O)-CᵣH₂ᵣ₊₁ (2)

In Formula (2), p represents an integer of from 1 to 3, q represents an integer of from 1 to 3, r represents an integer of from 1 to 15, and t represents an integer of from 0 to 2.

The rubber composition for tires of an embodiment of the present invention can be suitably used for high-performance tires or racing tires. For this rubber composition for tires, 150 parts by mass or more of silica is preferably blended in 100 parts by mass of a diene rubber containing from 30 to 65 mass% of the modified styrene-butadiene rubber. Furthermore, the CTAB adsorption specific surface area of the silica is preferably from 150 to 250 m²/g. Furthermore, from 40 to 150 parts by mass total of at least one plasticizer selected from the group consisting of an oil, a liquid polymer, and a thermoplastic resin is blended per 100 parts by mass of the diene rubber. At this time, 15 parts by mass or more of an aromatic modified terpene resin is preferably blended per 100 parts by mass of the diene rubber.

The rubber composition for tires described above can suitably constitute a tread portion of a tire. A tire having a tread portion made of the rubber composition for tires of an embodiment of the present invention can provide wet performance and wear resistance in a compatible manner.

### Description of Embodiments

The rubber composition for tires contains a modified styrene-butadiene rubber having an alkoxysilyl group in a diene rubber. This modified styrene-butadiene rubber contains an alkoxysilyl group, and when the modified styrene-butadiene rubber is measured by gel permeation chromatography, the molecular weight distribution curve is unimodal, and the molecular weight distribution (PDI) is less than 1.7. By blending such a modified styrene-butadiene rubber, dispersibility of silica is improved, and wet performance and wear resistance can be provided together at high levels.

Examples of the alkoxysilyl group contained in the modified styrene-butadiene rubber include an alkoxysilyl group containing an alkoxy having from 1 to 10 carbons. Two or three alkoxy moieties having different numbers of carbons may be contained, or one or two alkyl moieties may be contained. Examples of the alkoxysilyl group include a methoxysilyl group, an ethoxysilyl group, a propoxysilyl group, an isopropoxysilyl group, and a butoxysilyl group. By allowing the modified styrene-butadiene rubber to contain the alkoxysilyl group, high affinity with silica can be achieved, and the dispersibility thereof can be improved.

For the modified styrene-butadiene rubber, when the modified styrene-butadiene rubber is measured by gel permeation chromatography, the molecular weight distribution curve is unimodal, and the molecular weight distribution (PDI) is less than 1.7. When the molecular weight distribution curve of the modified styrene-butadiene rubber is unimodal, high uniformity of the molecule is achieved, and the modified styrene-butadiene rubber is uniformly distributed and dispersed in the diene rubber, and thus higher affinity with silica can be achieved. The molecular weight distribution (PDI) is a ratio (Mw/Mn) of the weight average molecular weight (Mw) to the number average molecular weight (Mn) measured by gel permeation chromatography. When the molecular weight distribution (PDI) is less than 1.7, similarly to the case of the molecular weight distribution curve being unimodal, high uniformity of the molecule is achieved, and the modified styrene-butadiene rubber is uniformly distributed and dispersed in the diene rubber, and thus higher affinity with silica can be achieved. The molecular weight distribution (PDI) is more preferably 1.0 or more and less than 1.7, and more preferably from 1.1 to 1.6. Such a modified styrene-butadiene rubber can be preferably obtained by a continuous polymerization.

In the present specification, when the molecular weight distribution curve, the weight average molecular weight (Mw), and the number average molecular weight (Mn) of the modified styrene-butadiene rubber are measured by gel permeation chromatography, examples of the conditions includes the following:
Instrument: Gel permeation chromatography [GPC: HLC-8020, available from Tosoh Corporation]
Column: GMH-HR-H (available from Tosoh Corporation), two connected in serial
Measurement temperature: 40°C
Carrier gas: Helium
Flow rate: 5 mmol/L
Sample: 10 mg was dissolved in 10 mL THF
Injection volume: 10 µL
Detector: Differential refractometer (RI-8020)

The modified styrene-butadiene rubber containing an alkoxysilyl group is contained in an amount of 30 to 90 mass%, preferably 35 to 85 mass%, and more preferably 40 to 80 mass%, per 100 mass% of the diene rubber. By allowing 30 mass% or more of the modified styrene-butadiene rubber containing an alkoxysilyl group to be blended, dispersibility of silica can be improved. Furthermore, wear resistance can be ensured by allowing 90 mass% or less to be blended.

The rubber composition for tires may contain another diene rubber besides the modified styrene-butadiene rubber. Examples of such another diene rubber include natural rubber, isoprene rubber, butadiene rubber, unmodified styrene-butadiene rubber, modified styrene-butadiene rubber other than the modified styrene-butadiene rubber described above, styrene-isoprene rubber, isoprene-butadiene rubber, ethylene-propylene-diene copolymer rubber, chloroprene rubber, and acrylonitrile-butadiene rubber. These diene rubbers may be modified with one or more functional groups. The type of the functional group is not particularly limited, and examples thereof include an epoxy group, carboxy group, amino group, hydroxy group, alkoxy group, silyl group, alkoxysilyl group, amide group, oxysilyl group, silanol group, isocyanate group, isothiocyanate group, carbonyl group, and aldehyde group. Other diene rubber is preferably contained in an amount of 10 to 70 mass%, preferably 15 to 65 mass%, and more preferably 20 to 60 mass%, per 100 mass% of the diene rubber.

Preferred examples of other diene rubber include natural rubber, butadiene rubber, and styrene-butadiene rubber. Natural rubber, butadiene rubber, and styrene-butadiene rubber (except for the modified styrene-butadiene rubber containing an alkoxysilyl group described above) are not particularly limited, and those typically used in rubber compositions for tires can be used. Blending natural rubber can ensure wear resistance of a tire. Furthermore, blending butadiene rubber can ensure wear resistance of a tire. Furthermore, blending styrene-butadiene rubber can ensure wet grip properties of a tire.

The rubber composition for tires contains 30 parts by mass or more of silica in 100 parts by mass of the diene rubber. By blending silica, wet performance can be improved. Examples of the silica include wet silica (hydrous silicic acid), dry silica (silicic anhydride), calcium silicate, and aluminum silicate. One type of these can be used alone, or a combination of two or more types of these can be used. Furthermore, surface-treated silica, in which the surface of silica is surface-treated by a silane coupling agent, may be also used.

In the rubber composition for tires, a silane coupling agent is preferably blended together with silica, and good dispersibility of silica can be achieved. As the silane coupling agent, a type of silane coupling agent that is typically blended together with silica can be used. The silane coupling agent is blended in an amount of preferably from 5 to 15 mass%, and more preferably from 8 to 12 mass%, of the silica content.

The rubber composition for tires may optionally contain, as other inorganic fillers besides silica, carbon black, calcium carbonate, magnesium carbonate, talc, clay, mica, alumina, aluminum hydroxide, titanium oxide, and calcium sulfate. One type of these other inorganic fillers can be used alone, or a combination of two or more types of these can be used.

In 100 parts by mass of the diene rubber, preferably from 5 to 100 parts by mass, and more preferably from 5 to 80 parts by mass, of the carbon black may be blended. Blending 5 parts by mass or more of the carbon black can ensure tire durability. Additionally, rigidity can be ensured, and rolling resistance can be made small. By setting the amount of the carbon black to 100 parts by mass or less, wet performance can be ensured. A combination of two or more types of the carbon blacks may be used.

The rubber composition for tires has a glass transition temperature of higher than -50°C. By setting the glass transition temperature to higher than - 50°C, wet performance can be ensured. The glass transition temperature is preferably -47°C or higher and -15°C or lower, and more preferably -45°C or higher and -17°C or lower. The glass transition temperature of the rubber composition for tires can be determined as a temperature at the midpoint of the transition region by measuring a thermogram at a rate of temperature increase of 10°C/min by using a differential scanning calorimeter (DSC).

The rubber composition for tires may also contain various additives that are commonly used in a rubber composition for tires within a range that does not impair the object of the present invention. Examples thereof include vulcanization or crosslinking agents, vulcanization accelerators, anti-aging agents, plasticizers, processing aids, liquid polymers, and thermosetting resins. These additives may be kneaded by any commonly known method to form a rubber composition for tires, and can be used for vulcanization or crosslinking. Blended amounts of these additives may be any known amount, so long as the objects of the present invention are not hindered.

### Rubber composition for summer tires

The rubber composition for tires that resolves the issues of the present invention and that is suitable for constituting a tread portion of a summer tire (hereinafter, also referred to as "rubber composition for summer tires") contains preferably from 30 to 180 parts by mass, more preferably from 30 to 150 parts by mass, and even more preferably from 40 to 140 parts by mass, of silica in 100 parts by mass of the diene rubber containing the modified styrene-butadiene rubber having the alkoxysilyl group. By blending 30 parts by mass or more of silica, wet performance can be ensured. Furthermore, reduction in wear resistance can be suppressed by blending 180 parts by mass or less.

The rubber composition for summer tires preferably contains from 0.1 to 20 parts by mass of an alkyltriethoxysilane containing an alkyl group having from 7 to 20 carbons with respect to the silica content. By blending the alkyltriethoxysilane, better dispersibility of silica can be achieved. The alkyltriethoxysilane is blended in an amount of preferably 0.1 to 20 parts by mass, and more preferably 0.5 to 15 parts by mass, with respect to the silica content. By blending 0.1 parts by mass or more of the alkyltriethoxysilane, better dispersibility of silica can be achieved. Furthermore, better wear resistance can be achieved by blending 20 parts by mass or less.

Examples of the alkyl group having from 7 to 20 carbons include a heptyl group, an octyl group, a nonyl group, a decyl group, an undecyl group, and a dodecyl group. Among these, from the perspective of miscibility with the diene rubber, an alkyl group having from 8 to 10 carbons is more preferred, and an octyl group and a nonyl group are even more preferred.

The rubber composition for summer tires preferably contains from 2 to 20 mass% of the silane coupling agent represented by the following Average Compositional Formula (1) or General Formula (2) with respect to the silica content.

(A)ₐ(B)_{b}(C)_{c}(D)_{d}(R1)ₑSiO_{(4-2a-b-c-d-e)/2} (1)

In Formula (1), A represents a divalent organic group containing a sulfide group, B represents a monovalent hydrocarbon group having from 5 to 10 carbons, C represents a hydrolyzable group, D represents an organic group containing a mercapto group, R1 represents a monovalent hydrocarbon group having from 1 to 4 carbons, and a to e satisfy the relationships: 0 ≤ a < 1, 0 < b < 1, 0 < c < 3, 0 < d < 1, 0 ≤ e < 2, and 0 < 2a + b + c + d + e < 4.

(CₚH₂ₚ₊₁)ₜ(CₚH₂ₚ₊₁O)₃₋ₜ-Si-C_{q}H_{2q}-S-C(O)-CᵣH₂ᵣ₊₁ (2)

In Formula (2), p represents an integer of from 1 to 3, q represents an integer of from 1 to 3, r represents an integer of from 1 to 15, and t represents an integer of from 0 to 2.

By allowing the silane coupling agent represented by Average Compositional Formula (1) or General Formula (2) above to be blended, better dispersibility of silica can be achieved. Preferably from 2 to 20 mass%, and more preferably from 3 to 17 mass%, of the silane coupling agent represented by Average Compositional Formula (1) or General Formula (2) above is contained with respect to the silica content. By allowing 2 mass% or more of the silane coupling agent represented by Average Compositional Formula (1) or General Formula (2) above to be blended, better dispersibility of silica can be achieved. Furthermore, better wear resistance can be achieved by allowing 20 mass% or less to be blended.

In Formula (1) above, A represents a divalent organic group having a sulfide group. Among these, a group represented by Formula (3) below is preferred.

*-(CH₂)ₙ-Sₓ-(CH₂)ₙ-* (3)

In Formula (3) above, n is an integer of from 1 to 10, among which an integer of from 2 to 4 is preferable. x is an integer of from 1 to 6, among which an integer of from 2 to 4 is preferable. Furthermore, * represents a bond position.

Specific examples of the group represented by Formula (3) above include *-CH₂-S₂-CH₂-*, *-C₂H₄-S₂-C₂H₄-*, *-C₃H₆-S₂-C₃H₆-*, *-C₄H₈-S₂-C₄H₈-*, *-CH₂-S₄-CH₂-*, *-C₂H₄-S₄-C₂H₄-*, *-C₃H₆-S₄-C₃H₆-*, and *-C₄H₈-S₄-C₄H₈-*.

In Formula (1) above, B is a monovalent hydrocarbon group having from 5 to 10 carbons, and specific examples thereof include alkyl groups, such as a hexyl group, an octyl group, and a decyl group.

In Formula (1) above, C represents a hydrolyzable group, and specific examples thereof include alkoxy groups, phenoxy groups, carboxyl groups, alkenyloxy groups, and the like. Of these, a group represented by the following Formula (4) is preferable.

* -OR² (4)

In Formula (4) above, R² represents an alkyl group having from 1 to 20 carbons, an aryl group having from 6 to 10 carbons, an aralkyl group (aryl alkyl group) having from 6 to 10 carbons, or an alkenyl group having from 2 to 10 carbons, among which an alkyl group having from 1 to 5 carbons is preferable. Specific examples of the alkyl group having from 1 to 20 carbons include a methyl group, an ethyl group, a propyl group, a butyl group, a hexyl group, an octyl group, a decyl group, and an octadecyl group. Specific examples of the aryl group having from 6 to 10 carbons include a phenyl group, and a tolyl group. Specific examples of the aralkyl group having from 6 to 10 carbons include a benzyl group, and a phenylethyl group. Specific examples of the above alkenyl group having from 2 to 10 carbons include a vinyl group, a propenyl group, a pentenyl group, and the like.

In Formula (4) above, * indicates a bond position.

In Formula (1) above, D is an organic group having a mercapto group. Among these, a group represented by Formula (5) below is preferred.

*-(CH₂)ₘ-SH (5)

In Formula (5) above, m represents an integer of from 1 to 10, and particularly preferably an integer of from 1 to 5. In Formula (5) above, * indicates a bond position.

Specific examples of the group represented by Formula (5) above include *-CH₂SH, *-C₂H₄SH, *-C₃H₆SH, *-C₄H₈SH, *-C₅H₁₀SH, *-C₆H₁₂SH, *-C₇H₁₄SH, *-C₈H₁₆SH, *-C₉H₁₈SH, and *-C₁₀H₂₀SH.

In Average Compositional Formula (1) above, R1 represents a monovalent hydrocarbon group having from 1 to 4 carbons. Examples of the monovalent hydrocarbon group having from 1 to 4 carbons include a methyl group, an ethyl group, an n-propyl group, an isopropyl group, an n-butyl group, an isobutyl group, and a tert-butyl group.

In Average Compositional Formula (1) above, a to e satisfy the relationships 0 ≤ a< 1, 0 < b < 1,0 < c < 3, 0 < d < 1, 0 ≤ e < 2, and 0 < 2a + b + c + d + e < 4.

In Average Compositional Formula (1) above, a is preferably 0 < a ≤ 0.50 from the perspective of improving the effect of the present invention. b is preferably 0 < b, and more preferably 0.10 ≤ b ≤ 0.89, from the perspective of improving the effect of the present invention. Furthermore, c is preferably 1.2 ≤ c ≤ 2.0 from the perspective of improving the effect of the present invention. Furthermore, d is preferably 0.1 ≤ d ≤ 0.8 from the perspective of improving the effect of the present invention.

The sulfur-containing silane coupling agent (polysiloxane) represented by Average Compositional Formula (1) and the production method thereof are publicly known and are disclosed, for example, in WO 2014/002750.

In General Formula (2) above, from the perspective of achieving high affinity with silica and good dispersibility of silica in the rubber composition for tires, p is preferably from 2 to 3, and more preferably 2. q is preferably from 2 to 3, and more preferably 3, because of the same reason. From the perspective of achieving good scorch time during kneading of the rubber composition for tires, r is preferably from 5 to 10, more preferably from 6 to 9, and even more preferably 7. t represents an integer of from 0 to 2, preferably 0 or 1, and more preferably 0. Such a silane coupling agent can be produced by a known method and, for example, can be produced by a method described in WO 99/09036. Examples of a commercially available product include NXT silane available from Momentive Performance Materials.

The rubber hardness at 20°C of the rubber composition for summer tires is preferably 55 or higher, and more preferably from 57 to 80. Setting the rubber hardness of the rubber composition for summer tires to 55 or higher is preferred because better wear resistance is achieved. In the present specification, the rubber hardness of the rubber composition refers to the hardness of the rubber measured at a temperature of 20°C with a type A durometer in accordance with JIS K6253.

### Rubber composition for high-performance tires or racing tires

The rubber composition for tires that resolves the issues of the present invention and that is suitable for constituting a tread portion of a high-performance tire or racing tire (hereinafter, also referred to as "rubber composition for high-performance tires or racing tires") preferably contains 150 parts by mass or more of silica in 100 parts by mass of the diene rubber containing from 30 to 65 mass% of the modified styrene-butadiene rubber described above.

In the rubber composition for high-performance tires or racing tires, preferably from 30 to 65 mass%, and more preferably from 40 to 55 mass%, of the modified styrene-butadiene rubber is contained in 100 mass% of the diene rubber. When 30 mass% or more of the modified styrene-butadiene rubber is contained, wear resistance can be improved. Furthermore, when 65 mass% or less of the modified styrene-butadiene rubber is contained, wet performance can be maintained or improved.

In the rubber composition for high-performance tires or racing tires, preferably 150 parts by mass or more, and more preferably from 160 to 180 parts by mass of silica is blended per 100 parts by mass of the diene rubber. Setting the amount of silica to 150 parts by mass or more is preferred to achieve better wet performance. Note that, when a large amount of silica is blended, processability deteriorates due to increased viscosity of the rubber composition; however, in an embodiment of the present invention, because the modified styrene-butadiene rubber described above is contained, increase in the viscosity can be suppressed, and processability can be improved.

The CTAB adsorption specific surface area of silica is preferably from 150 to 250 m²/g, and more preferably from 160 to 200 m²/g. By setting the CTAB adsorption specific surface area to 150 m²/g or more, better wet performance is achieved. Furthermore, by setting the CTAB adsorption specific surface area to 250 m²/g or less, while the good dispersibility of silica is maintained, increase in the viscosity of the rubber composition can be suppressed. In the present specification, the CTAB adsorption specific surface area of silica is measured in accordance with JIS K 6217-3.

The rubber composition for high-performance tires or racing tires preferably contains at least one plasticizer selected from the group consisting of an oil, a liquid polymer, and a thermoplastic resin. This allows better wet performance and processability to be achieved. A total amount of these plasticizers is preferably from 40 to 150 parts by mass, and more preferably from 50 to 120 parts by mass, per 100 parts by mass of the diene rubber. By setting the total amount of the plasticizers to 40 parts by mass or more, better wet performance and processability can be achieved. Furthermore, by setting the total amount of the plasticizers to 150 parts by mass or less, wear resistance can be ensured.

Examples of the oil include a vegetable oil such as a coconut oil; a mineral oil-based hydrocarbon such as a paraffinic oil, a naphthene-based oil, and an aromatic oil, and hydrogenated products of these. More specific examples thereof include a paraffin oil, a polybutene oil, a polyisoprene oil, a polybutadiene oil, and an aroma oil.

Examples of the liquid polymer include a liquid diene rubber such as a liquid polybutene, a liquid polyisobutene, a liquid polyisoprene, and a liquid polybutadiene; a liquid poly-α-olefin; a liquid ethylene-α-olefin copolymer such as a liquid ethylene-propylene copolymer and a liquid ethylene-butylene copolymer.

The thermoplastic resin can be a thermoplastic resin typically blended in a rubber composition for tires, and examples thereof include a terpene phenol resin, a terpene resin, an aromatic modified terpene resin, a hydrogenated petroleum resin in which a hydroxy group is bonded, a rosin resin, a rosin ester-based resin and an alkyl-modified product thereof, a polyol-modified or alkylphenol-modified xylene resin and novolac phenol resin, a coumarone resin, and a styrene resin. As the thermoplastic resin, a hydrocarbon resin having a softening point of 120°C or higher is preferably used, and an aromatic modified terpene resin is particularly preferred.

The aromatic modified terpene resin is obtained by polymerizing a terpene and an aromatic compound. Examples of the terpene include α-pinene, β-pinene, dipentene, and limonene. Examples of the aromatic compound include styrene, α-methylstyrene, vinyl toluene, and indene. Among these, styrene modified terpene resins are preferable as the aromatic modified terpene resin. Because such an aromatic modified terpene resin has good miscibility with the diene rubber, dynamic visco-elasticity of the rubber composition can be improved, and wet grip performance and heat build-up can be improved.

Preferably 15 parts by mass or more, and more preferably from 20 to 30 parts by mass, of the aromatic modified terpene resin is preferably contained per 100 parts by mass of the diene rubber. By blending 15 parts by mass or more of the aromatic modified terpene resin, better wet performance can be achieved.

Furthermore, the softening point of the aromatic modified terpene resin is preferably from 60°C to 150°C, and more preferably from 80°C to 130°C. By setting the softening point of the aromatic modified terpene resin to 60°C or higher, wet performance is further improved. By setting the softening point of the aromatic modified terpene resin to 150°C or lower, increase in rolling resistance is suppressed.

The rubber composition for tires described above is preferably a rubber composition for tire tread and can suitably constitute a tread portion of a tire. A tire having a tread portion made of the rubber composition for tires of an embodiment of the present invention can provide wet performance and wear resistance in a compatible manner. Note that the tire may be a pneumatic tire or a non-pneumatic tire.

Embodiments according to the present invention are further described below by Examples. However, the scope of the present invention is not limited to these Examples.

### Examples

### Rubber composition for summer tires

Each of the rubber compositions for tires (Examples 1 to 10, Standard Example 1, and Comparative Examples 1 to 4) was prepared according to the formulations presented in Tables 1 and 2 with the compounding agents presented in Table 3, which were used as common components. With the exception of sulfur and vulcanization accelerators, the components were kneaded in a 1.7 L sealed Banbury mixer for 5 minutes, then discharged from the mixer, and cooled at room temperature. This was placed in the 1.7 L sealed Banbury mixer described above, and the sulfur and the vulcanization accelerators were then added and mixed, and thus rubber compositions for tires were prepared. Furthermore, the blended amounts of the compounding agents presented in Table 3 are expressed as values in parts by mass per 100 parts by mass of the diene rubbers presented in Tables 1 and 2.

Furthermore, using the obtained rubber compositions for tires, the rubber hardness, wear resistance, wet performance, and acceleration pass-by noise were evaluated by the following methods.

### Rubber hardness

Vulcanized rubber sheets were prepared by vulcanizing the obtained rubber compositions for tires in a mold having a predetermined shape at 160°C for 20 minutes, and measurement was performed at a temperature of 20°C by a type A durometer in accordance with JIS K 6253.

### Wear resistance

For the vulcanized rubber sheets obtained as described above, wear resistance test was performed in accordance with JIS K 6264-2:2005 using a Lambourn abrasion test machine (available from Iwamoto Seisakusho Co. Ltd.) under the following conditions to measure wear mass: applied force: 4.0 kg/cm³ (= 39 N); slip rate: 30%; duration of wear resistance test: 4 minutes; and test temperature: room temperature. The obtained results are presented on the "Wear resistance" rows of Tables 1 and 2 as index values, with a value of Standard Example 1 being 100. A larger index value indicates a superior wear resistance, and the index value of 96 or higher is considered as being at a conventional level.

### Wet performance

For the vulcanized rubber sheets obtained as described above, a loss tangent tan δ at 0°C (tan δ (0°C)) was determined by using a viscoelasticity spectrometer (available from Toyo Seiki Seisaku-sho, Ltd.) in accordance with JIS K 6394. The obtained results are presented in the "Wet performance" rows of Tables 1 and 2 as index values, with a value of Standard Example 1 being 100. A larger index value indicates a superior wet performance.

### Acceleration pass-by noise

Pneumatic tires in which the obtained rubber compositions for tires were used in the tread were vulcanization-molded. Acceleration pass-by noise of a tire was determined by measurement performed for a real car based on the acceleration noise measurement method stipulated in safety standards. The obtained results are presented on the "Acceleration pass-by noise" rows of Tables 1 and 2 as index values, with a value of Standard Example 1 being 100. The smaller this index value is, the better the acceleration pass-by noise is.

**[Table 1]**

| | | Standard Example 1 | Example 1 | Comparative Example 1 | Comparative Example 2 | Example 2 | Comparative Example 3 | Comparative Example 4 |
|---|---|---|---|---|---|---|---|---|
| Modified SBR-1 | parts by mass | 80 | | | | | 60 | |
| Modified SBR-2 | parts by mass | | 80 | | 100 | 80 | 20 | 80 |
| Modified SBR-3 | parts by mass | | | 80 | | | | |
| NR | parts by mass | 10 | 10 | 10 | | 10 | 10 | 10 |
| BR | parts by mass | 10 | 10 | 10 | | 10 | 10 | 10 |
| Silica-1 | parts by mass | 85 | 85 | 85 | 85 | 120 | 85 | 25 |
| Carbon black-1 | parts by mass | 5 | 5 | 5 | 5 | 5 | 5 | 60 |
| Coupling agent-1 | parts by mass | 7.2 | 7.2 | 7.2 | 7.2 | 10.2 | 7.2 | 2.1 |
| Aroma oil | parts by mass | 5 | 5 | 5 | 5 | 35 | 5 | 0 |
| Tg of rubber composition | °C | -43 | -43 | -40 | -32 | -42 | -43 | -43 |
| Rubber hardness | - | 60 | 59 | 61 | 59 | 59 | 62 | 59 |
| Wear resistance | index value | 100 | 100 | 102 | 92 | 107 | 103 | 110 |
| Wet performance | index value | 100 | 109 | 96 | 115 | 112 | 102 | 92 |
| Acceleration pass-by noise | index value | 100 | 99 | 102 | 98 | 99 | 103 | 98 |

**Table 2**

| | | Example 3 | Example 4 | Example 5 | Example 6 | Example 7 | Example 8 | Example 9 | Example 10 |
|---|---|---|---|---|---|---|---|---|---|
| Modified SBR-2 | parts by mass | 80 | 80 | 80 | 80 | 80 | 80 | 80 | 80 |
| NR | parts by mass | 10 | 10 | 10 | 10 | 10 | 10 | 10 | 10 |
| BR | parts by mass | 10 | 10 | 10 | 10 | 10 | 10 | 10 | 10 |
| Silica-1 | parts by mass | 150 | 85 | 85 | 85 | 85 | 85 | 85 | 85 |
| Carbon black-1 | parts by mass | 5 | 5 | 5 | 5 | 5 | 5 | 5 | 5 |
| Coupling agent-1 | parts by mass | 13.6 | | | 2.1 | | | 7.2 | 7.2 |
| Coupling agent-2 | parts by mass | | 7.2 | 14.4 | 7.2 | | | | |
| Coupling agent-3 | parts by mass | | | | | 7.2 | 14.4 | | |
| Alkylsilane | parts by mass | | | | | | | 5 | 10 |
| Aroma oil | parts by mass | 55 | 5 | 0 | 5 | 5 | 0 | 5 | 0 |
| Tg of rubber composition | °C | -42 | -43 | -43 | -43 | -43 | -43 | -43 | -43 |
| Rubber hardness | - | 59 | 59 | 59 | 61 | 59 | 60 | 58 | 58 |
| Wear resistance | index value | 102 | 98 | 98 | 100 | 99 | 100 | 97 | 96 |
| Wet performance | index value | 116 | 113 | 115 | 112 | 112 | 116 | 111 | 113 |
| Acceleration pass-by noise | index value | 99 | 98 | 98 | 101 | 99 | 100 | 97 | 97 |

**Table 3**

| Common additive formulation of rubber composition of Tables 1 and 2 | | |
|---|---|---|
| Anti-aging agent | 2.0 | parts by mass |
| Stearic acid | 2.0 | parts by mass |
| Zinc oxide | 3.0 | parts by mass |
| Sulfur | 1.5 | parts by mass |
| Vulcanization accelerator-1 | 1.7 | parts by mass |
| Vulcanization accelerator-2 | 2.0 | parts by mass |

For Tables 1 to 3, the types of used raw materials are as follows.
- Modified SBR-1: Styrene-butadiene rubber containing an alkoxysilyl group; NS560, available from Zeon Corporation; Glass transition temperature: - 32°C; molecular weight distribution curve measured by GPC was bimodal, and molecular weight distribution (PDI) thereof was 1.5.
- Modified SBR-2: Styrene-butadiene rubber containing an alkoxysilyl group; rubber produced in Polymerization Examples 1; Glass transition temperature: -31°C; molecular weight distribution curve measured by GPC was unimodal, and molecular weight distribution (PDI) thereof was 1.3.
- Modified SBR-3: Styrene-butadiene rubber containing an alkoxysilyl group; NS540, available from Zeon Corporation; Glass transition temperature: - 29°C; molecular weight distribution curve measured by GPC was bimodal, and molecular weight distribution (PDI) thereof was 1.9.
- NR: Natural rubber, TSR 20, glass transition temperature was -65°C
- BR: Butadiene rubber; Nipol BR1220, available from Zeon Corporation, glass transition temperature was -105°C
- Silica-1: ZEOSIL 1165MP, available from Solvay
- Carbon black-1: SEAST 7HM N234, available from Tokai Carbon Co., Ltd.
- Coupling agent-1: Si69, available from Evonik Degussa, bis(triethoxysilylpropyl)tetrasulfide
- Coupling agent-2: Silane coupling agent containing polysiloxane represented by average compositional formula of General Formula (1), available from Shin-Etsu Chemical Co., Ltd.; polysiloxane represented by average compositional formula (-C₃H₆-S₄-C₃H₆-)_{0.071}(-C₈H₁₇)_{0.571}(-OC₂H₅)_{1.50}(-C₃H₆SH)_{0.286}SiO_{0.75}
- Coupling agent-3: Silane coupling agent represented by General Formula (2), NXT silane, available from Momentive Performance Materials Inc., represented by the following formula:

   (CH₃CH₂O)₃-Si-C₃H₆-S-C(O)-C₆H₁₂CH₃
- Alkylsilane: Octyltriethoxysilane, KBE-3083, available from Shin-Etsu Chemical Co., Ltd.
- Aroma oil: Extract No. 4S, available from Showa Shell Sekiyu K.K.
- Stearic acid: beads stearic acid, available from NOF Corporation
- Zinc oxide: Zinc Oxide III, available from Seido Chemical Industry Co., Ltd.
- Anti-aging agent: 6PPD, available from Korea Kumho Petrochemical
- Sulfur: Golden Flower oil treated sulfur powder, available from Tsurumi Chemical Industry Co., Ltd.
- Vulcanization accelerator-1: NOCCELER CZ-G, available from Ouchi Shinko Chemical Industrial Co., Ltd.
- Vulcanization accelerator-2: Soxinol D-G, available from Sumitomo Chemical Co., Ltd.

### Production Example 1: Production of modification initiator

Two vacuum dried 4 L stainless steel pressure vessels were prepared. In a first pressure vessel, 6922 g of cyclohexane, 85 g of a compound represented by Chemical Formula (i) below, and 60 g of tetramethylethylenediamine were charged, and a first reaction solution was produced. At the same time, in a second pressure vessel, 180 g of 2.0 M liquid n-butyllithium and 6926 g of cyclohexane were charged, and thus a second reaction solution was produced. At this time, the molar ratio of the compound represented by Chemical Formula (i) to the n-butyllithium to the tetramethylethylenediamine was 1:1:1. In a condition where the pressure of each of the pressure vessels was maintained at 7 bar, using a mass flowmeter, the first reaction solution was charged in a continuous reactor through a first continuous channel at an injection rate of 1.0 g/min and the second reaction solution was charged in the continuous reactor through a second continuous channel at an injection rate of 1.0 g/min. At this time, the temperature in the continuous reactor was maintained at -10°C, the internal pressure was maintained at 3 bar by using a back pressure regulator, and the retention time in the reactor was adjusted to 10 minutes or less. The reaction was terminated, and thus a modification initiator was obtained.

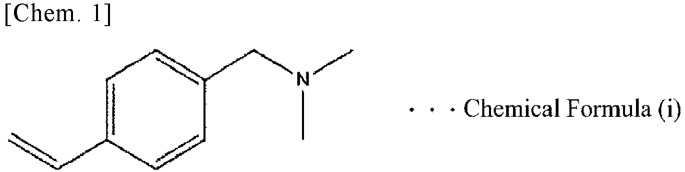

### Polymerization Example 1: Polymerization method of modified SBR-2

In a first reactor in a continuous reactor in which three reactors were connected in series, injection was performed at 6.5 kg/h for a styrene solution in which 60 mass% of styrene was dissolved in n-hexane (62.4 mol/h in terms of styrene), at 7.7 kg/h for a 1,3-butadiene solution in which 60 mass% of 1,3-butadiene was dissolved in n-hexane (85.4 mol/h in terms of 1,3-butadiene), at 47.0 kg/h for n-hexane, at 40 g/h for 1,2-butadiene solution in which 2.0 mass% of 1,2-butadiene was dissolved in n-hexane, at 50.0 g/h for a solution in which 10 mass% of N,N,N',N'-tetramethylethylenediamine (TMEDA) was dissolved in n-hexane as a polar additive, and at 400.0 g/h for the modification initiator produced in Production Example 1 below. At this time, the temperature of the first reactor was maintained at 55°C, and when the polymerization conversion ratio became 41%, the polymerized material was transferred from the first reactor to the second reactor through a transfer pipe.

Then, in a second reactor, injection was performed at a rate of 2.3 kg/h for a 1,3-butadiene solution in which 60 mass% of 1,3-butadiene was dissolved in n-hexane (25.5 mol/h in terms of 1,3-butadiene). At this time, the temperature of the second reactor was maintained at 65°C, and when the polymerization conversion ratio became 95% or higher, the polymerized material was transferred from the second reactor to the third reactor through a transfer pipe.

The polymerized material was transferred from the second reactor to the third reactor, and a solution in which N-(3-(1H-1,2,4-triazol-1-yl)propyl)-3-(trimethoxysilyl)-N-(3-(trimethoxysilyl)propyl)propane-1-amine was dissolved (solvent: n-hexane) as a modifying agent was charged continuously in the third reactor [modifying agent: act. Li (polymerization initiator) = 1: 1 mol]. The temperature of the third reactor was maintained at 65°C.

Thereafter, in the polymerization solution discharged from the third reactor, a solution in which 30 mass% of IR1520 (available from BASF) was dissolved as an antioxidant was charged at a rate of 170 g/h and agitated. The polymerized material obtained as a result of this was charged in warm water heated by steam, the solvent was removed by agitation, and thus a modified conjugated diene polymer [modified SBR-2] was produced.

As is clear from Tables 1 and 2, the rubber composition for tires that is suitable for a summer tire of each of Examples 1 to 10 achieved excellent wear resistance and wet performance. Furthermore, an excellent result was achieved for the acceleration pass-by noise, which is required for a summer tire.

The rubber composition for tires of Comparative Example 1 exhibited poor wet performance because the molecular weight distribution curve of the modified styrene-butadiene rubber (modified SBR-3) was bimodal, and the molecular weight distribution (PDI) was more than 1.7. Furthermore, the acceleration pass-by noise was large.

The rubber composition for tires of Comparative Example 2 exhibited poor wear resistance because the amount of the modified styrene-butadiene rubber (modified SBR-2) was more than 90 mass%.

The rubber composition for tires of Comparative Example 3 had large acceleration pass-by noise because the amount of the modified styrene-butadiene rubber (modified SBR-2) was less than 30 mass%.

The rubber composition for tires of Comparative Example 4 exhibited poor wet performance because the amount of silica was less than 30 parts by mass.

### Rubber composition for high-performance tires or racing tires

Each of the rubber compositions for tires (Examples 11 to 20, Standard Example 2, and Comparative Examples 5 to 8) was prepared according to the formulations presented in Tables 4 and 5 with the compounding agents presented in Table 6 used as common components. With the exception of the sulfur and the vulcanization accelerators, the components were kneaded in a 1.7 L sealed Banbury mixer for 5 minutes, then discharged from the mixer, and cooled at room temperature. This was placed in the 1.7 L sealed Banbury mixer described above, and the sulfur and the vulcanization accelerators were then added and mixed, and thus a rubber composition for tires was prepared. The blended amounts of the compounding agents presented in Table 6 are expressed as values in parts by mass with respect to 100 parts by mass of the diene rubbers presented in Tables 4 and 5.

Furthermore, using the obtained rubber composition for tires, the processability (Mooney viscosity), wear resistance, and wet performance were evaluated by the following methods.

### Wear resistance

The obtained rubber composition was vulcanized in a mold having a predetermined shape at 160°C for 20 minutes to produce a vulcanized rubber sheet. Wear resistance test was performed for the vulcanized rubber sheet in accordance with JIS K 6264-2:2005 using a Lambourn abrasion test machine (available from Iwamoto Seisakusho Co. Ltd.) under the following conditions to measure wear mass: applied force: 4.0 kg/cm³ (= 39 N); slip rate: 30%; duration of wear resistance test: 4 minutes; and test temperature: room temperature. The obtained results are presented on the "Wear resistance" rows of Tables 4 and 5 as index values, with a value of Standard Example 2 being 100. A larger index value indicates a superior wear resistance, and the index value of 101 or higher is considered as being at a conventional level.

### Wet performance

The obtained rubber composition was vulcanized in a mold having a predetermined shape at 160°C for 20 minutes to produce a vulcanized rubber sheet. The value of tan δ (0°C) was measured for the obtained vulcanized rubber sheet with an elongation deformation distortion of 10% ± 2%, an oscillation frequency of 20 Hz, and a temperature of 0°C using a viscoelastic spectrometer (available from Toyo Seiki Seisaku-sho, Ltd.) in accordance with JIS K 6394:2007. The obtained results are presented in the "Wet performance" rows of Tables 4 and 5 as index values, with a value of Standard Example 2 being 100. A larger index value indicates a superior wet performance.

### Processability (Mooney viscosity)

Mooney viscosity of the obtained rubber composition was measured in accordance with JIS K 6300-1 using an L-type rotor (diameter: 38.1 mm, thickness: 5.5 mm) in a Mooney viscometer under the conditions of a preheating time of 1 minute, a rotor rotation time of 4 minutes, 100°C, and 2 rpm. Each of the obtained results was expressed as an index value obtained by calculating a reciprocal thereof, with a value of Standard Example 1 being assigned the value of 100, and presented in the "processability" row in Tables 4 and 5. A larger index value indicates superior processability.

**Table 4**

| | | Standard Example 2 | Comparative Example 5 | Comparative Example 6 | Comparative Example 7 | Comparative Example 8 | Example 11 | Example 12 | Example 13 |
|---|---|---|---|---|---|---|---|---|---|
| Modified SBR-2 | parts by mass | | 20 | 100 | | | 50 | | 65 |
| Modified SBR-3 | parts by mass | | | | | 100 | | | |
| Modified SBR-4 | parts by mass | 100 | 80 | | | | 50 | 50 | 35 |
| Modified SBR-5 | parts by mass | | | | 100 | | | 50 | |
| Silica-1 | parts by mass | 160 | 160 | 160 | 160 | 160 | 160 | 160 | 160 |
| Carbon black-2 | parts by mass | 5 | 5 | 5 | 5 | 5 | 5 | 5 | 5 |
| Coupling agent-1 | parts by mass | 12.8 | 12.8 | 12.8 | 12.8 | 12.8 | 12.8 | 12.8 | 12.8 |
| Aromatic modified terpene resin | parts by mass | 20 | 20 | 20 | 20 | 20 | 20 | 20 | 20 |
| Aroma oil | parts by mass | 30 | 30 | 30 | 30 | 30 | 30 | 30 | 30 |
| Tg of rubber composition | °C | -25 | -25 | -25 | -36 | -24 | -25 | -32 | -25 |
| Wear resistance | index value | 100 | 99 | 108 | 112 | 96 | 101 | 108 | 103 |
| Wet performance | index value | 100 | 100 | 95 | 97 | 102 | 106 | 105 | 105 |
| Processability | index value | 100 | 100 | 122 | 104 | 96 | 108 | 105 | 111 |

**Table 5**

| | | Example 14 | Example 15 | Example 16 | Example 17 | Example 18 | Example 19 | Example 20 |
|---|---|---|---|---|---|---|---|---|
| Modified SBR-2 | parts by mass | 50 | 50 | 50 | 50 | 50 | 50 | 50 |
| Modified SBR-4 | parts by mass | 50 | 50 | 50 | 50 | 50 | 50 | 50 |
| Silica-1 | parts by mass | 150 | 200 | | | 160 | 160 | 160 |
| Silica-2 | parts by mass | | | 160 | | | | |
| Silica-3 | parts by mass | | | | 160 | | | |
| Carbon black-2 | parts by mass | 5 | 5 | 5 | 5 | 5 | 5 | 5 |
| Coupling agent-1 | parts by mass | 12.0 | 16.0 | 12.8 | 12.8 | 12.8 | 12.8 | 12.8 |
| Aromatic modified terpene resin | parts by mass | 20 | 20 | 20 | 20 | 20 | 20 | 10 |
| Aroma oil | parts by mass | 30 | 30 | 30 | 30 | 5 | 120 | 30 |
| Tg of rubber composition | °C | -25 | -25 | -25 | -25 | -22 | -32 | -29 |
| Wear resistance | index value | 101 | 102 | 104 | 101 | 105 | 101 | 104 |
| Wet performance | index value | 104 | 112 | 115 | 101 | 102 | 102 | 101 |
| Processability | index value | 110 | 102 | 102 | 102 | 101 | 130 | 101 |

**Table 6**

| Common additive formulation of rubber composition of Tables 4 and 5 | | |
|---|---|---|
| Anti-aging agent | 2.0 | parts by mass |
| Stearic acid | 2.0 | parts by mass |
| Zinc oxide | 3.0 | parts by mass |
| Sulfur | 2.0 | parts by mass |
| Vulcanization accelerator-1 | 1.0 | part by mass |
| Vulcanization accelerator-2 | 2.0 | parts by mass |

For Tables 4 to 6, the types of raw materials used are as follows.
- Modified SBR-2: Styrene-butadiene rubber containing an alkoxysilyl group; same as the modified SBR-2 described above; Glass transition temperature: -31°C; molecular weight distribution curve measured by GPC was unimodal, and molecular weight distribution (PDI) thereof was 1.3.
- Modified SBR-3: Styrene-butadiene rubber containing an alkoxysilyl group; NS540, available from Zeon Corporation; Glass transition temperature: - 29°C; molecular weight distribution curve measured by GPC was bimodal, and molecular weight distribution (PDI) thereof was 1.9.
- Modified SBR-4: Styrene-butadiene rubber containing a hydroxy group; Tufdene E581, available from Asahi Kasei Corporation; Glass transition temperature: -31°C; molecular weight distribution curve measured by gel permeation chromatography (GPC) was unimodal, and molecular weight distribution (PDI) thereof was 2.3.
- Modified SBR-5: Styrene-butadiene rubber containing an alkoxysilyl group; rubber produced in Polymerization Examples 2 described below; Glass transition temperature: -53°C; molecular weight distribution curve measured by GPC was unimodal, and molecular weight distribution (PDI) thereof was 1.5.
- Silica-1: ZEOSIL 1165MP, available from Solvay; CTAB adsorption specific surface area: 160 m²/g
- Silica-2: Premium 200MP, available from Solvay; CTAB adsorption specific surface area: 200 m²/g
- Silica-3: ZEOSIL 1085MP, available from Solvay; CTAB adsorption specific surface area: 80 m²/g
- Carbon black-2: SEAST 9M, available from Tokai Carbon Co., Ltd.; N₂SA = 150 m²/g
- Coupling agent-1: Si69, available from Evonik Degussa, bis(triethoxysilylpropyl)tetrasulfide
- Aromatic modified terpene resin: TO-85, available from Yasuhara Chemical Co., Ltd.
- Aroma oil: Extract No. 4S, available from Showa Shell Sekiyu K.K.
- Stearic acid: beads stearic acid, available from NOF Corporation
- Zinc oxide: Zinc Oxide III, available from Seido Chemical Industry Co., Ltd.
- Anti-aging agent: Santoflex 6PPD, available from Flexsys
- Sulfur: MUCRON OT-20, available from Shikoku Chemicals Corporation.
- Vulcanization accelerator-1: NOCCELER CZ-G, available from Ouchi Shinko Chemical Industrial Co., Ltd.
- Vulcanization accelerator-2: Perkacit DPG, available from Flexsys

### Polymerization Example 2: Polymerization method of modified SBR-5

A modified conjugated diene-based polymer (modified SBR-5) was produced in the same manner as in Polymerization Example 1 except for performing continuous charging, into the first reactor, at 4.6 kg/h for a styrene solution in which 60 mass% of styrene was dissolved in n-hexane (44.2 mol/h in terms of styrene), at 11.5 kg/h for a 1,3-butadiene solution in which 60 mass% of 1,3-butadiene was dissolved in n-hexane (127.6 mol/h in terms of 1,3-butadiene), at 40.0 g/h for a solution in which 10 mass% of N,N,N',N'-tetramethylethylenediamine (TMEDA) was dissolved in n-hexane as a polar additive, in Polymerization Example 1 described above [coupling agent: act. Li (polymerization initiator) = 1:1 mol].

As can be seen from Tables 4 and 5, it was confirmed that the rubber composition for tires that is suitable for high-performance tires or racing tires tires of each of Examples 11 to 20 achieved excellent wet performance and wear resistance. Furthermore, processability required for high-performance tires or racing tires was also excellent.

The rubber composition for tires of Comparative Example 5 was not able to improve wear resistance because the amount of the modified styrene-butadiene rubber (modified SBR-2) was less than 30 mass%.

The rubber composition for tires of Comparative Example 6 exhibited poor wet performance because the amount of the modified styrene-butadiene rubber (modified SBR-2) was more than 90 mass%. Furthermore, processability also became poor.

The rubber composition for tires of Comparative Example 7 exhibited poor wet performance because the molecular weight distribution (PDI) of the modified styrene-butadiene rubber (modified SBR-5) was more than 1.7.

The rubber composition for tires of Comparative Example 8 exhibited poor wear resistance because the molecular weight distribution curve of the modified styrene-butadiene rubber (modified SBR-3) was bimodal, and the molecular weight distribution (PDI) was more than 1.7.

## Claims

1. A rubber composition for tires, comprising 30 parts by mass or more of silica blended in 100 parts by mass of a diene rubber, the diene rubber comprising from 30 to 90 mass% of a modified styrene-butadiene rubber containing an alkoxysilyl group,
the modified styrene-butadiene rubber having, when measured by gel permeation chromatography, a molecular weight distribution curve of a unimodal shape and a molecular weight distribution (PDI) of less than 1.7, and
a glass transition temperature of the rubber composition for tires being higher than -50°C.

2. The rubber composition for tires according to claim 1, wherein from 30 to 180 parts by mass of silica is blended in 100 parts by mass of the diene rubber.

3. The rubber composition for tires according to claim 2, wherein a rubber hardness at 20°C is 55 or higher.

4. The rubber composition for tires according to claim 2 or 3, wherein from 0.1 to 20 parts by mass of alkyltriethoxysilane containing an alkyl group having from 7 to 20 carbons is blended with respect to the silica content.

5. The rubber composition for tires according to any of claims 2 to 4, wherein from 2 to 20 mass% of a silane coupling agent is blended with respect to the silica content, and
the silane coupling agent is represented by the following Average Compositional Formula (1) or General Formula (2):
(A)ₐ(B)_{b}(C)_{c}(D)_{d}(R1)ₑSiO_{(4-2a-b-c-d-e)/2} (1)
where in Formula (1), A represents a divalent organic group containing a sulfide group, B represents a monovalent hydrocarbon group having from 5 to 10 carbons, C represents a hydrolyzable group, D represents an organic group containing a mercapto group, R1 represents a monovalent hydrocarbon group having from 1 to 4 carbons, and a to e satisfy the relationships: 0 ≤ a < 1, 0 < b < 1, 0 < c < 3, 0 < d < 1, 0 ≤ e < 2, and 0 < 2a + b + c + d + e < 4;
(CₚH₂ₚ₊₁)ₜ(CₚH₂ₚ₊₁O)₃₋ₜ-Si-C_{q}H_{2q}-S-C(O)-CᵣH₂ᵣ₊₁ (2)
where in Formula (2), p represents an integer of from 1 to 3, q represents an integer of from 1 to 3, r represents an integer of from 1 to 15, and t represents an integer of from 0 to 2.

6. The rubber composition for tires according to claim 1, wherein 150 parts by mass or more of silica is blended in 100 parts by mass of a diene rubber containing from 30 to 65 mass% of the modified styrene-butadiene rubber.

7. The rubber composition for tires according to claim 6, wherein a CTAB adsorption specific surface area of the silica is from 150 to 250 m²/g.

8. The rubber composition for tires according to claim 6 or 7, wherein a total of from 40 to 150 parts by mass of at least one plasticizer selected from the group consisting of an oil, a liquid polymer, and a thermoplastic resin is blended per 100 parts by mass of the diene rubber.

9. The rubber composition for tires according to claim 8, wherein 15 parts by mass or more of an aromatic modified terpene resin is blended per 100 parts by mass of the diene rubber.
